# EUROPÄISCHE PATENTSCHRIFT

(11) **EP 2 501 587 B1**
(45) Veröffentlichungstag und Bekanntmachung des Hinweises auf die Patenterteilung: **06.08.2014**
(21) Anmeldenummer: 10784719.6
(22) Anmeldetag: 19.11.2010
(51) Int. Cl.: B60R 7/06

(54) **STAUFACH**
STORAGE COMPARTMENT
TIROIR DE RANGEMENT

(30) Priorität: 20.11.2009 DE 102009055678
(43) Veröffentlichungstag der Anmeldung: 26.09.2012
(73) Patentinhaber: Faurecia Innenraum Systeme GmbH, 76767 Hagenbach (DE)
(72) Erfinder: DOLL, Volker, 76829 Ranschbach (DE)
(74) Vertreter: Pfenning, Meinig & Partner GbR
(86) Internationale Anmeldenummer: PCT/EP2010/007277
(87) Internationale Veröffentlichungsnummer: WO 2011/060963

(56) Entgegenhaltungen:
- DE-U1- 20 005 552
- US-A1- 2003 080 131

## Beschreibung

Gegenstand der vorliegenden Erfindung ist ein Staufach nach dem Oberbegriff des Anspruchs 1.

Staufächer sind in nahezu jedem Kraftfahrzeug oder Lastkraftwagen, insbesondere im Fahrzeuginnenraum, zu finden. Die Staufächer weisen zumeist einen Stauraum und eine diesen verschließende Abdeckklappe auf. Je nachdem, ob das Staufach in der Instrumententafel, der Mittelkonsole oder den Türen angeordnet ist, fügt sich die Abdeckklappe in die umgebende Oberfläche ein und ist zumeist nur anhand der Konturen bzw. eines Öffnungsknopfes oder -griffes zu erkennen.

Besondere Beachtung wird dem Mechanismus zum Öffnen und Schließen der Abdeckklappe geschenkt. Hier haben sich im Stand der Technik viele verschiedene Ansätze gezeigt. So zeigt beispielsweise die gattungsbildende Druckschrift DE 200 05 552 U1 ein Staufach mit einem Stauraum sowie einer eine Öffnung des Stauraums abdeckenden Abdeckklappe, welche die Öffnung in einer geöffneten Stellung freigibt und in einer geschlossenen Stellung verschließt. Das Öffnen und Schließen der Abdeckklappe wird über einen Mechanismus vermittelt, wobei der Mechanismus unter anderem eine erste Koppelstange umfasst, welche an einem ersten Drehpunkt um eine erste Achse im Stauraum drehbar gelagert angeordnet ist und einen von dem ersten Drehpunkt beabstandeten zweiten Drehpunkt umfasst, wobei am zweiten Drehpunkt ein an der Abdeckklappe starr angeordneter Hebel um eine zweite Achse drehbar gelagert ist. Um ein entsprechendes Öffnen der vorgenannten Abdeckklappe zu ermöglichen, werden zudem weitere Hebel sowohl an der Koppelstange als auch an der Abdeckklappe angeordnet, wobei Teile des Mechanismus in einer Kulissenbahn geführt werden und so ein definiertes Öffnen und Schließen der Vorrichtung ermöglichen. Die Kulissenbahn wird unter anderem deswegen benötigt, um ein gleichzeitiges laterales Verschieben der Abdeckklappe und ein Rotieren der Abdeckklappe zu einer geöffneten Position hin zu ermöglichen.

Durch das Vorhandensein mehrerer Verbindungen zwischen dem Mechanismus und der Klappe geht entweder seitlich oder nach der Öffnung gerichtet Stauraum verloren. Des Weiteren wird im geöffneten Zustand ein großer Teil des Mechanismus von außen her sichtbar.

Ein weiteres Staufach ist beispielsweise aus der US 2003/080131 A1 bekannt. Der dort vorgestellte Mechanismus versenkt beim Öffnen des Stauraums die Abdeckklappe in einem hinteren Teil des Staufachs, so dass nicht das gesamte Volumen des Staufachs als Stauraum zur Verfügung steht.

Eine der Aufgaben der vorliegenden Erfindung ist es, den Mechanismus zum Öffnen und Schließen der Abdeckklappe einfacher und platzsparender zu gestalten. Die Aufgabe wird mittels eines Staufaches mit den Merkmalen des Anspruchs 1 gelöst.

Der starr an der Abdeckklappe angeordnete Hebel, welcher um eine zweite Achse drehbar gelagert ist, weist im Bereich des zweiten Drehpunkts einen Zahnradabschnitt, vorzugsweise mit Außenzähnen, auf. Dieser Zahnradabschnitt steht mit einem weiteren drehbar gelagerten Zahnrad in Eingriff. Auf diese Weise ist es möglich, ein laterales Aufschwingen, wie es für einen drehbar gelagerten Hebel, jedoch starren Hebel möglich ist, mit einer gezielten Drehbewegung zum Aufrotieren des Hebels während des lateralen Aufschwingens zu überlagern.

Hierzu wird das weitere Zahnrad, welches mit dem Zahnradabschnitt des Hebels in Eingriff steht, entweder direkt oder indirekt in Bewegung gesetzt.

Das weitere drehbar gelagerte Zahnrad ist dabei an der Koppelstange angeordnet, so dass eine festgelegte räumliche Ausrichtung des Zahnradabschnitts am Hebel und des drehbar gelagerten Zahnrads möglich und vorzugsweise gegeben ist.

Die Lateralbewegung der Abdeckklappe wird dabei im Wesentlichen durch die Drehung der Koppelstange von einer geschlossenen Position in eine geöffnete Position bewirkt. Dieser Drehbewegung der Koppelstange ist eine Drehbewegung des Zahnrads überlagert, welche den Winkel zwischen der Abdeckklappe im geschlossenen Zustand und der Abdeckklappe im geöffneten Zustand vergrößert, um so ein verbessertes Erreichen des Inhalts des Stauraums zu ermöglichen.

Dabei kann der gewünschte Winkel zum einen über den Radius des weiteren Zahnrads und den Radius des Zahnradabschnitts eingestellt werden. Hierbei ist jedoch zu beachten, dass insbesondere im Bereich des Zahnradsabschnitts auch leicht abweichende Konfigurationen von der Kreisbogenform möglich sind.

Ein weiterer Vorteil der vorgeschlagenen Lösung eines Mechanismus ist es, dass lediglich eine Verbindung zwischen der Abdeckklappe und der Koppelstange notwendig ist. Hierbei ist der Begriff "eine Verbindung" dahingehend zu verstehen, dass je Koppelstange nur eine Verbindung notwendig ist. Selbstverständlich ist es möglich, die Abdeckklappe über mehrere starre Hebel, welche mit jeweils einer Koppelstange verbunden und vorzugsweise jeweils am Rand der Abdeckklappe angeordnet sind, auszustatten. Der Hebel, welcher die einzige Verbindung zur Abdeckklappe darstellen kann, kann von der Öffnung aus betrachtet nach hinten verschoben werden. Auf diese Weise nimmt der Mechanismus nur wenig Platz in Anspruch, so dass die Öffnung bzw. der zur Verfügung stehende Stauraum gegenüber anderen Lösungen größer ausfallen kann.

Insgesamt betrachtet entscheiden der Radius des weiteren Zahnrads sowie der Abstand des ersten Drehpunkts vom zweiten Drehpunkt der Koppelstange und der Zahnabstand des weiteren Zahnrads bzw. des Zahnradabschnitts darüber, wie groß der Öffnungswinkel der Abdeckklappe gegenüber einer rein lateralen Verschiebung ausfällt.

Weitere Ausbildungsformen sind in den unter- und nebengeordneten Ansprüchen aufgeführt, wobei einzelne Merkmale der einzelnen Ansprüche mit einander kombinierbar sind.

In einer Ausführungsform ist die Abdeckklappe vom Zahnradabschnitt durch den Hebel beabstandet. Die Größe des Abstands der Unterseite der Abdeckklappe und dem nächsten Punkt des Zahnradabschnitts beträgt mindestens einen Durchmesser eines dem Zahnradabschnitt zuordenbaren Kreises. Für den Fall, dass der Zahnradabschnitt elliptisch ausgeführt wird, beträgt der Abstand mindestens die Entfernung der kleinen Halbachse der Ellipse. Hierdurch wird bewirkt, dass ein Großteil der beweglichen Bauteile des Mechanismus zum Öffnen und Schließen bzw. des Öffnungs- und Schließmechanismus im geöffneten Zustand der Abdeckklappe für den Benutzer nur wenig sichtbar durch die Seitenwände des Stauraums verdeckt wird bzw. im Stauraum selbst verbleibt.

In einer möglichen Variante ist das weitere Zahnrad am ersten Drehpunkt koaxial zur ersten Achse angeordnet. Bei einer Bewegung der Koppelstange entgegen dem Uhrzeigersinn muss auch das weitere Zahnrad gegen den Uhrzeigersinn bewegt werden, um eine Bewegung des Zahnradabschnitts im Uhrzeigersinn zu bewirken und somit ein gleichzeitiges laterales Verschieben und Drehen der Abdeckklappe zu ermöglichen.

Das Übersetzungsverhältnis zwischen dem Zahnrad und dem Zahnradabschnitt beträgt zwischen 1,5:1 und 1:1. Hierdurch wird ein besonders ansprechendes Verhältnis zwischen lateralem Versatz und rotierender Bewegung der Abdeckklappe beim Öffnen derselben erreicht.

In einer Alternative dazu wird das weitere drehbar gelagerte Zahnrad an einem dritten Drehpunkt der ersten Koppelstange um eine dritte Achse drehbar angeordnet, wobei die dritte Drehachse von der ersten und zweiten Achse verschieden ist. Hierdurch kann ein kleinerer Radius des weiteren Zahnrads und somit eine platzsparendere Ausführungsform des Mechanismus realisiert werden.

Das Übersetzungsverhältnis des weiteren Zahnrads zum Zahnrad zum Zahnradabschnitt beträgt vorzugsweise 1,7:1,3:1 bis 1,7:1,1:1 bzw. 1,4:1,1:1.

In der alternativen Ausführungsform ist es möglich, ein zur ersten Achse koaxial liegendes, feststehendes Zahnrad anzuordnen, auf welchem das weitere Zahnrad abrollt, so dass beim Bewegen der Koppelstange im oder gegen den Uhrzeigersinn aufgrund des Abrollens des weiteren Zahnrads auf dem feststehenden Zahnrad eine der Koppelstange gleichläufige Bewegung des weiteren Zahnrads bewirkt wird. Diese Ausführungsform hat den Vorteil, dass lediglich eine Bewegung, entweder eine Bewegung der Koppelstange oder eine Bewegung des weiteren Zahnrads, bewirkt werden muss. Aufgrund der festen Abstände und der feststehenden Anordnung auf der Koppelstange führt die Bewegung entweder der Koppelstange oder des weiteren Zahnrads dazu, dass sich auch die nicht aktiv bewegte Komponente der beiden vorgenannten Komponenten in der gewünschten Art und Weise bewegt.

Zum Öffnen des Staufachs kann zudem ein Push-push-Mechanismus oder ähnlicher Mechanismus eingesetzt werden. Durch das Öffnen der Abdeckklappe kann entweder über einen elektrischen Antrieb, welcher auf die Koppelstange oder das weitere Zahnrad wirkt, und/oder ein Federelement, welches bei Entspannung der Feder zu einem Öffnen der Abdeckklappe führt, eine vollständige Öffnung des Staufach erreicht werden. Auch ist es möglich, das Öffnen beispielsweise über eine Torsionsfeder zu bewirken, welche beispielsweise im Bereich des Zahnradabschnitts oder des weiteren Zahnrads angeordnet ist. Der elektrische Antrieb, das Federelement oder ähnliche gleich wirkende Elemente werden nachfolgend als Bewegungsführungsvorrichtungen bzw. Mittel zur geführten Bewegung der Abdeckklappe bezeichnet und bewirken allgemein eine selbständige Öffnung der Abdeckklappe nach dem Betätigen eines Verriegelungsmechanismus wie beispielsweise eines Push-push-Mechanismus. Dies bedeutet insbesondere, dass beim Betätigen des Verriegelungsmechanismus bei geschlossener Stellung der Abdeckklappe die Bewegungsführungsvorrichtung ein selbständiges Verfahren der Abdeckklappe in die geöffnete Stellung bewirkt.

In einer weiteren Ausführungsform ist im Stauraum eine Halterung vorhanden, welche an einem Haltepunkt um eine Drehachse, welche nachfolgend als Stauachse bezeichnet wird, drehbar gelagert angeordnet ist. Die Halterung weist dabei einen dem Haltepunkt gegenüberliegenden, d. h. von der Stauachse entfernten Auflagepunkt auf, welcher die Halterung an einem der Stauachse abgewandten Ende begrenzt. In die Halterung kann unter anderem ein Navigations- oder ein Multimediagerät eingesetzt werden.

Da die Halterung drehbar gelagert ist, kann diese beispielsweise in dieselbe Richtung wie die Koppelstange rotierend in dem Stauraum versenkt werden. Beim Öffnen des Staufachs rotiert die Halterung um die Stauachse in gleicher Richtung wie die Koppelstange, d. h. es wird eine parallele Ausrichtung der Stauachse und der ersten Achse zueinander bevorzugt. Es sind jedoch auch Ausführungen denkbar, in welchen die Halterung in der der Bewegungsrichtung der Koppelstange entgegengesetzten Richtung zur Koppelstange rotiert.

In einer Variation dieser Ausführungsform berührt der Auflagepunkt eine Unterseite der Abdeckklappe, wobei der Auflagepunkt vorzugsweise auf einer gekrümmten Oberfläche der Halterung liegt. Beim Aufklappen der Abdeckklappe kann die Halterung entlang der Oberfläche der Abdeckklappe gleiten. Ebenso kann nach Öffnen der Abdeckklappe, d. h. durch Betätigen beispielsweise eines Push-push-Mechanismus, eine im Bereich des Haltepunkts, des zweiten oder dritten Drehpunkts angeordnete Torsionsfeder die Abdeckklappe aufdrücken, da der Auflagepunkt von unten auf die Unterseite der Abdeckklappe drückt.

In einer weiteren Ausführungsform weist das Staufach eine zweite Koppelstange auf, welche an dem ersten Drehpunkt um die erste Achse im Stauraum drehbar gelagert angeordnet ist, wobei die zweite Koppelstange mit der Halterung in Wirkverbindung steht, so dass beim Betätigen des Mechanismus zum Öffnen und Schließen der Abdeckklappe eine Drehbewegung der Halterung initiierbar ist. Hierbei ist die Variante gegeben, dass sich die zweite Koppelstange unabhängig oder in Abhängigkeit von der ersten Koppelstange bewegt und im Bereich des Haltepunkts einen Zahnradabschnitt aufweist, welcher in ein um die Stauachse koaxial angeordnetes Zahnrad eingreift.

Als Material für die Abdeckklappe, den Hebel, die Zahnräder oder die Koppelstange ist vorzugsweise ein Kunststoff zu verwenden. Insbesondere die Abdeckklappe und der daran angeordnete Hebel können beispielsweise aus Polypropylen oder einem anderen Kunststoff, vorzugsweise einstückig, hergestellt werden. Für die Koppelstange und die Zahnräder können auch Metalle verwendet werden.

Der Stauraum umfasst vorzugsweise ein Volumen von weniger als 100 1.

Nachfolgend soll die Erfindung anhand verschiedener Ausführungsbeispiele näher erläutert werden. Es zeigen:
- Fig. 1: ein erstes Ausführungsbeispiel im geöffneten Zustand;
- Fig. 2: ein erstes Ausführungsbeispiel im halb geschlossenen Zustand;
- Fig. 3: ein erstes Ausführungsbeispiel im geschlossenen Zustand;
- Fig. 4: ein zweites Ausführungsbeispiel im geöffneten Zustand.

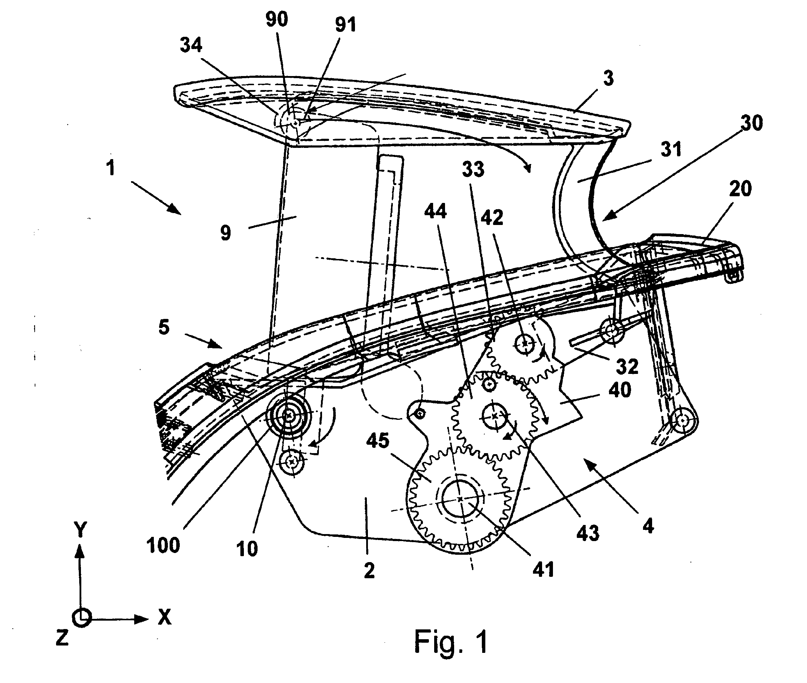

Die Fig. 1 zeigt ein erstes Ausführungsbeispiel eines Staufachs. Das Staufach 1 umfasst einen Stauraum 2, welcher durch ein eigenständiges Gehäuse oder durch eine Vertiefung in dem den Stauraum 2 begrenzenden Träger 20 gebildet sein kann. Den Stauraum 2 abdeckend ist eine Abdeckklappe 3 vorhanden, welche über einen Mechanismus 4 geöffnet und geschlossen werden kann. Dabei wird die Öffnung 5, welche durch den umgebenden Träger 20 begrenzt wird, geöffnet bzw. geschlossen. An der Abdeckklappe 3 ist ein Hebel 30 angeordnet, welcher sich aus einem gekrümmten Mittelstück 31 und einem Fortsatz 32 zusammensetzt. Das gekrümmte Mittelstück 31 ist dabei in x-Richtung betrachtet konkav geformt. Hierdurch ist es möglich, den zur Benutzung zur Verfügung stehenden Stauraum zu vergrößern ohne den Stauraum 2 bzw. die Öffnung 5 selbst zu vergrößern. Am Ende des Fortsatzes 32 befindet sich ein Zahnradabschnitt 33. Der Hebel 30 ist mit einer Koppelstange 40 verbunden.

Die Koppelstange 40 ist um eine erste Drehachse 41 drehbar gelagert. Zugleich weist die Koppelstange 40 eine von der ersten Drehachse 41 beabstandete zweite Drehachse 42 auf, um welche der Hebel 30 drehbar gelagert ist. Der Zahnradabschnitt 31 greift zudem in ein weiteres, um eine dritte Achse 43 drehbar gelagertes weiteres Zahnrad 44 ein. Das weitere Zahnrad 44 greift in das feststehende Zahnrad 45 ein, welches koaxial zur ersten Drehachse 41 angeordnet ist.

Das weitere Zahnrad 44 rollt beim Schließen der Abdeckklappe 3, wie es aus der Abfolge der Fign. 1 bis 3 erkennbar ist, in Uhrzeigerrichtung auf dem feststehenden Zahnrad 45 ab. Die Abrollbewegung wird.über den starren Hebel 30 und die damit verbundene auf die Abdeckklappe 3 ausgeübte Bewegung gegen den Uhrzeigersinn übertragen. Das bedeutet, dass die Bewegung des Zahnradabschnitts 31 und damit der gesamten Abdeckklappe entgegen der Drehbewegungsrichtung der Koppelstange bewirkt wird, so dass der Winkel zwischen der Abdeckklappe und dem Träger 20 beim Schließen des Staufachs sukzessive verringert werden kann.

In der Fig. 1 ist zudem eine Halterung 9 dargestellt, in welcher ein Navigationsgerät oder ein Multimediagerät eingesetzt werden kann. Hierbei können im Bereich des Stauraums 2 bzw. der Halterung 9 auch elektrische Kontaktierungen für eine Stromversorgung oder einen Anschluss zum Bordcomputer des Fahrzeugs vorhanden sein. Die Halterung 9 ist um eine Stauachse 10, welche an einem Haltepunkt des Stauraums 2 angeordnet ist, drehbar gelagert. Am in γ-Richtung gegenüberliegenden Ende der Halterung weist diese einen Auflagepunkt 90 in Form eines sich bewegenden Rades auf, wobei der Auflagepunkt 90 mit der Unterseite der Abdeckklappe 3 in Wirkverbindung steht. Hierzu weist die Abdeckklappe 3 eine Vertiefung auf, welche zu den Seiten in z-Richtung hin geschlossen ist, so dass ein seitliches Verrutschen der Abdeckklappe nicht möglich ist. Zudem weist die Abdeckklappe 3 an ihrem in entgegengesetzter x-Richtung liegenden Ende der Vertiefung eine Halbkulisse 34 auf, welche das Rad 91 aufnimmt und gleichwohl verhindert, dass sich die Halterung 9 beim Öffnen weiter gegen den Uhrzeigersinn drehen kann. Die Bewegung der Halterung 9 wird durch eine Torsionsfeder, welche im Bereich der Stauachse 10 angeordnet ist, bewirkt. Dies führt dazu, dass beim Bedienen eines nicht dargestellten, jedoch aus dem Stand der Technik bekannten Push-push-Mechanismus die Abdeckklappe 3 aus einer Verankerung gelöst wird und durch den Zug der Torsionsfeder 100, welche eine Bewegung der Halterung 9 gegen den Uhrzeigersinn bewirkt, aufgedrückt wird, da das Rad 91 an der Unterseite der Abdeckklappe 3 entlangläuft. Selbstverständlich ist es optional möglich, im Bereich der Abdeckklappe 3 Kulissenbahnen für den Auflagepunkt 90 anzubringen.

Im Bereich der Koppelstange 40 kann eine Zugfeder bzw. ein seilwindenartiger Motor angeordnet sein, welcher die Koppelstange 40 zum Schließen der Abdeckklappe 3 nach unten zieht und damit eine Lateral- und eine Rotationsbewegung der Abdeckklappe 3 gegen den Uhrzeigersinn bewirkt.

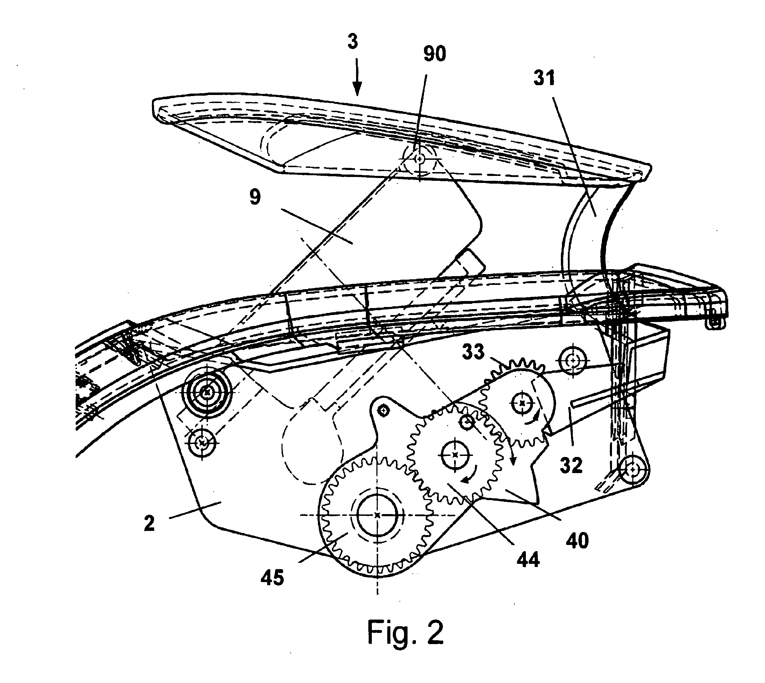

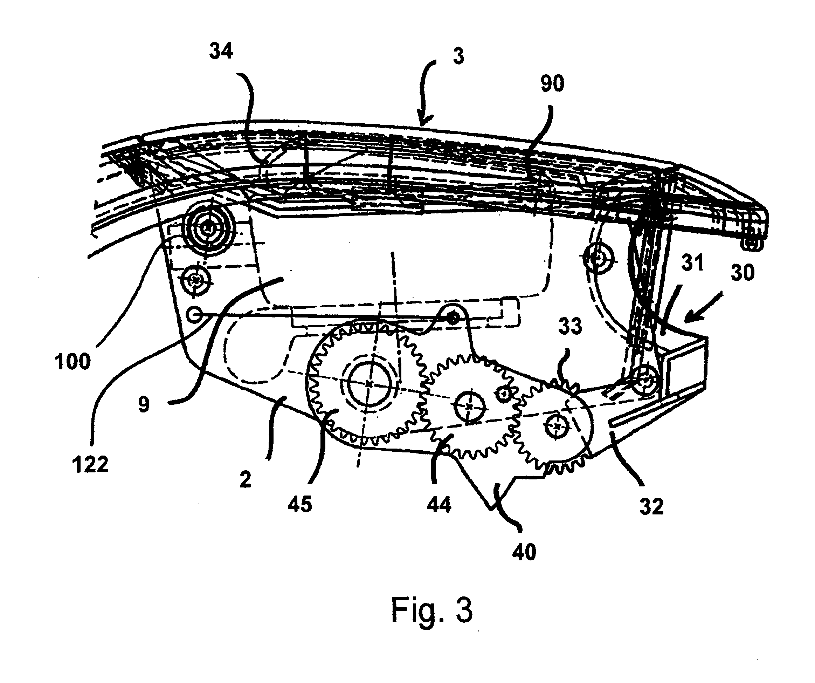

Wie aus den Fign. 2 und 3 ersichtlich ist, ist die Übersetzung zwischen dem Zahnradabschnitt 33 und dem weiteren Zahnrad 44 sowie dem feststehenden Zahnrad 45 derart gewählt, dass in Abhängigkeit von dem Abstand der ersten und zweiten Drehachse die Abdeckklappe 3 beim Schließen derselbigen eine leichte, gegen den Uhrzeigersinn gerichtete Rotationsbewegung und eine laterale Bewegung in negativer γ-Richtung ausführt. Dabei ist der Vorteil des gekrümmten Mittelstücks 31 des Hebels 30 insbesondere aus der Fig. 2 deutlich erkennbar. Durch die Bewegung der Koppelstange wird die Abdeckklappe in x-Richtung nach hinten bewegt, so dass mithilfe des gekrümmten Mittelstücks eine optimale Raumausnutzung innerhalb des Stauraums bewirkt werden kann. Des Weiteren ist deutlich erkennbar, dass ein Großteil der Rotationsbewegung erst dann stattfindet, wenn die Abdeckklappe schon fast in den in der Fig. 3 gezeigten geschlossenen Zustand überführt wurde.

Alternativ zu den Zahnrädern können auch andere ineinandergreifende Bauteile, welche konzentrische Bewegungen ausführen, eingesetzt werden.

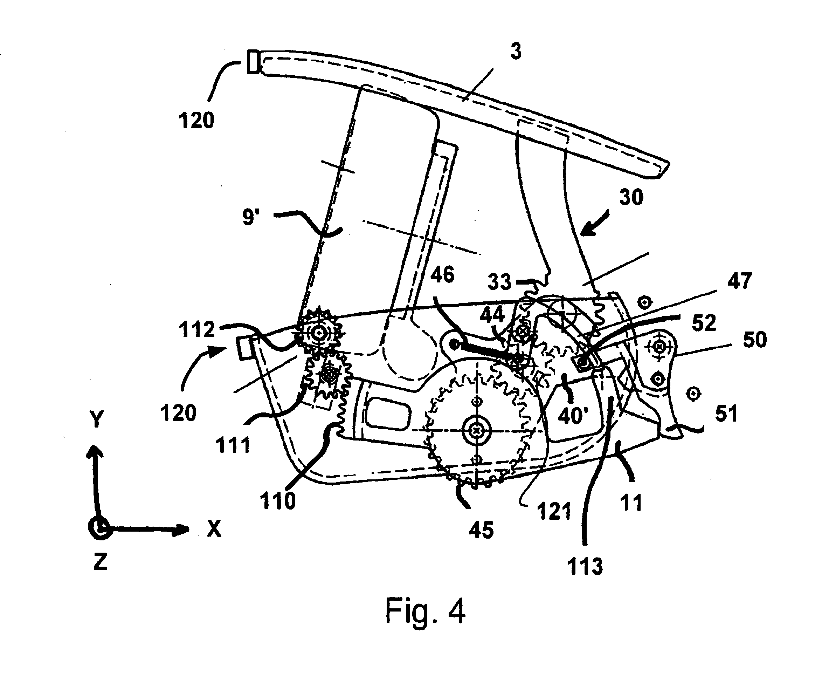

In der Fig. 4 ist ein zweites Ausführungsbeispiel des erfindungsgemäßen Staufachs gezeigt. Gleiche Bauteile bzw. Bauteile mit gleichen Funktionen sind mit denselben Bezugszeichen versehen. Nebst den bereits erwähnten Bauteilen ist eine weitere zweite Koppelstange 11 vorhanden, welche wie die erste Koppelstange 40' an dem ersten Drehpunkt um die erste Achse 41 im Stauraum drehbar gelagert angeordnet ist. Die zweite Koppelstange 11 weist an ihrem in negativer x-Richtung liegenden Ende einen Zahnradabschnitt 110 auf, welcher mit einem Zahnrad 111 in Eingriff steht. Das Zahnrad 111 ist ortsfest angebracht und nicht starr mit der zweiten Koppelstange verbunden. Durch die Drehung der zweiten Koppelstange 11 wird eine Bewegung des zweiten Zahnrads 112 bewirkt, so dass die Halterung 9' im Uhrzeigersinn im Stauraum 2 versenkt werden kann. Bei dem vorliegenden Ausführungsbeispiel ist es nicht notwendig, dass die Halterung über einen Auflagepunkt mit der Unterseite der Abdeckklappe in Verbindung steht, da der über die Koppelstange 11 geführte Mechanismus zum Einfahren der Halterung ausreichend ist.

Zugleich ist eine Wirkverbindung zwischen der Koppelstange 40' und der zweiten Koppelstange 11 gegeben. So weist die Koppelstange 40' einen mit einer Spannfeder 46 gehaltenen Hebel 47 auf, welcher sich auf einem Fortsatz 113 der zweiten Koppelstange 11 abstützt. Beim Schließen der Abdeckklappe 3 drückt nun der Hebel 47 auf die Koppelstange 11 und versenkt so die Halterung 9'. Dabei ist die Übersetzung derart gewählt, dass die Halterung 9' deutlich schneller im Stauraum versenkt wird, als die Abdeckklappe 3 geschlossen wird. Bei einer Bewegung der zweiten Koppelstange 11 im Uhrzeigersinn wird auch eine Bewegung einer Sperre 50 bewirkt. Sinkt die zweite Koppelstange 11 nun entscheidend in negativer γ-Richtung ab, wird die am Fortsatz 51 angeordnete Sperre 50 nicht länger von der zweiten Koppelstange 11 gehalten und der Fortsatz 51 führt eine Bewegung in negativer x-Richtung derart aus, dass der Hebel 47 nicht länger mit der zweiten Koppelstange 11 in Eingriff steht. Dies wird durch einen in z-Richtung ausgebildeten Fortsatz 52 der Sperre 50 bewirkt, welcher den Hebel 7 vom Fortsatz 113 abhebt. Hierdurch findet eine Entkopplung der Bewegung der zweiten Koppelstange 11 und der ersten Koppelstange 40 statt. Im Weiteren wird also nur noch die Abdeckklappe geschlossen, da sich zu diesem Zeitpunkt die Halterung bereits in der eingefahrenen Position befindet.

Weiterhin ist ein Verriegelungsmechanismus 120 vorhanden, welcher beispielsweise als Push-push-Mechanismus ausgebildet ist. Eine Bewegungsführungsvorrichtung 121 bewirkt nach dem Betätigen des Verriegelungsmechanismus 120 eine Bewegung der Abdeckklappe vom geschlossenen in den geöffneten Zustand. In dem Ausführungsbeispiel der Fig. 4 handelt es sich bei der Bewegungsführungsvorrichtung 121 um einen Motor, welcher das Zahnrad 44 antreibt. Alternativ kann zur selbständigen Öffnung der Abdeckklappe (nach der Lösung der Verriegelung) eine Spannfeder 122 verwendet werden, wie sie in der Fig. 3 eingezeichnet ist. Ein in der Fig. 3 nicht näher dargestellter Verriegelungsmechanismus wird betätigt, und die Vorspannung der Feder 122 bewirkt eine Rotation der Koppelstange gegen den Uhrzeigersinn zu der in der Fig. 1 dargestellten Position.

## Patentansprüche

1. Staufach (1) mit einem Stauraum (2), einer eine Öffnung des Stauraums abdeckenden Abdeckklappe (3), welche die Öffnung (5) in einer geöffneten Stellung freigibt und in einer geschlossenen Stellung verschließt, und einem Mechanismus (4) zum Öffnen und Schließen der Abdeckklappe, wobei der Mechanismus eine erste Koppelstange (40) umfasst, welche an einem ersten Drehpunkt um eine erste Achse (41) im Stauraum drehbar gelagert angeordnet ist und einen von dem ersten Drehpunkt beabstandeten zweiten Drehpunkt umfasst, und am zweiten Drehpunkt ein an der Abdeckklappe starr angeordneter Hebel (30) um eine zweite Achse (42) drehbar gelagert ist
**dadurch gekennzeichnet, dass** der an der Abdeckklappe angeordnete Hebel im Bereich des zweiten Drehpunkts einen Zahnradabschnitt (33) aufweist, welcher mit einem weiteren an der Koppelstange drehbar gelagerten Zahnrad (44) im Eingriff steht, und wobei das Zahnrad (44) auf der Koppelstange angeordnet ist, um ein Aufschwingen der Abdeckklappe mit einer lateralen Komponente zu ermöglichen.

2. Staufach nach Anspruch 1, **dadurch gekennzeichnet, dass** das weitere drehbar gelagerte Zahnrad (44) um eine dritte Achse (43) drehbar ist, wobei die dritte Achse an einem dritten Drehpunkt der ersten Koppelstange gelagert ist.

3. Staufach nach Anspruch 2, **dadurch gekennzeichnet, dass** die dritte Achse parallel zur ersten Achse und beabstandet zu dieser angeordnet ist und ein feststehendes Zahnrad (45) koaxial mit der ersten Achse angeordnet ist und mit dem weiteren Zahnrad in Eingriff steht.

4. Staufach nach einem der vorhergehenden Ansprüche, **dadurch gekennzeichnet, dass** der Mechanismus einen Antrieb (6) umfasst, welcher mit der ersten Koppelstange in vorzugsweise direkter Wirkverbindung steht.

5. Staufach nach einem der vorhergehenden Ansprüche, **dadurch gekennzeichnet, dass** die erste Koppelstange mit einem Rückstellelement (7) verbunden ist.

6. Staufach nach einem der vorhergehenden Ansprüche, **dadurch gekennzeichnet, dass** dem weiteren Zahnrad ein elektrischer oder elektromechanischer Antrieb (8) direkt zugeordnet ist.

7. Staufach nach einem der vorhergehenden Ansprüche, **dadurch gekennzeichnet, dass** eine Halterung (9) vorhanden ist, welche im Stauraum zu einem Haltepunkt um eine Stauachse (10) drehbar gelagert angeordnet ist und einen die Halterung begrenzenden Auflagepunkt (90) umfasst.

8. Staufach nach Anspruch 7, **dadurch gekennzeichnet, dass** der Auflagepunkt eine Unterseite der Abdeckklappe berührt, wobei der Auflagepunkt (90) vorzugsweise auf einer gekrümmten Oberfläche der Halterung liegt.

9. Staufach nach Anspruch 7, **dadurch gekennzeichnet, dass** eine zweite Koppelstange (11) an dem ersten Drehpunkt um die erste Achse (41) im Stauraum drehbar gelagert angeordnet ist, wobei die zweite Koppelstange mit der Halterung (9) in Wirkverbindung steht, so dass beim Tätigen des Mechanismus zum Öffnen und Schließen der Abdeckklappe eine Drehbewegung der Halterung initiierbar ist.

10. Staufach nach Anspruch 9, **dadurch gekennzeichnet, dass** die zweite Koppelstange (11) mit der ersten Koppelstange (40) zumindest teilweise in Wirkverbindung steht.

## Claims

1. A storage compartment (1) with a storage space (2), with a cover flap (3) which covers an opening of the storage space, releases the opening (5) in an opened position and closes it in a closed position, and with a mechanism (4) for opening and closing the cover flap, wherein the mechanism comprises a first coupling rod (40) which at a first rotation point is arranged in a rotatably mounted manner about a first axis (41) in the storage space and comprises a second rotation point distanced to the first rotation point, and at the second rotation point a lever (30) rigidly arranged on the cover flap is rotatably mounted about a second axis (42),
**characterised in that**
the lever arranged on the cover flap comprises a cog section (33) in the region of the second rotation point, said cog section meshing with a further cog (44) which is rotatably mounted on the coupling rod, wherein the further cog (44) is arranged on the coupling rod, to allow a swinging opening of the cover flap with a lateral component.

2. A storage compartment according to claim 1, **characterised in that** the further rotatably mounted cog (44) is rotatable about a third axis (43), wherein the third axis is mounted at a third rotation point of the first coupling rod.

3. A storage compartment according to claim 2, **characterised in that** the third axis is arranged parallel to the first axis and distanced to this, and a stationary cog (45) is arranged coaxially to the first axis and meshes with the further cog.

4. A storage compartment according to one of the preceding claims, **characterised in that** the mechanism comprises a drive (6) which is preferably in direct active connection with the first coupling rod.

5. A storage compartment according to one of the preceding claims, **characterised in that** the first coupling rod is connected to a restoring element (7).

6. A storage compartment according to one of the preceding claims, **characterised in that** an electrical or electromagnetic drive (8) is directly assigned to the further cog.

7. A storage compartment according to one of the preceding claims, **characterised in that** a holder (9) is present, which in the storage space at a holding point is arranged in a rotatably mounted manner about a tumble axis (10) and comprises a contact point (90) delimiting the holder.

8. A storage compartment according to claim 7, **characterised in that** the contact point contacts a lower side of the cover flap, wherein the contact point (90) preferably lies on a curved surface of the holder.

9. A storage compartment according to claim 7, **characterised in that** a second coupling rod (11) at the first rotation point is arranged in a rotatably mounted manner about the first axis (41) in the storage space, wherein the second coupling rod is actively connected to the holder (9) so that a rotation movement of the holder can be initiated on actuation of the mechanism for opening and closing the cover flap.

10. A storage compartment according to claim 9, **characterised in that** the second coupling rod (11) is at least partly actively connected to the first coupling rod (40).

## Revendications

1. Casier de rangement (1) comportant un volume de rangement (2), un couvercle rabattable (3) qui couvre l'ouverture du volume de rangement et qui, dans une position ouverte, libère l'ouverture (5) et, dans une position fermée, ferme ladite ouverture, et un mécanisme (4) destiné à ouvrir et fermer le couvercle rabattable, ledit mécanisme comportant une première tige de couplage (40), qui est montée sur un premier point de rotation de manière à pouvoir tourner autour d'un premier axe (41) dans le volume de rangement et comporte un deuxième point de rotation situé à distance du premier point de rotation, et un levier (30), disposé de manière fixe sur le couvercle rabattable, est monté sur le deuxième point de rotation de manière à pouvoir tourner autour d'un deuxième axe (42),
**caractérisé en ce que** le levier disposé sur le couvercle rabattable comporte, dans la zone du deuxième point de rotation, un segment de roue dentée (33) qui engrène avec une roue dentée (44) supplémentaire montée rotative sur la tige de couplage, et ladite roue dentée (44) étant agencée sur la tige de couplage pour permettre un pivotement vers le haut du couvercle rabattable avec une composante latérale.

2. Casier de rangement selon la revendication 1, **caractérisé en ce que** la roue dentée (44) supplémentaire montée rotative est apte à tourner autour d'un troisième axe (43), ledit troisième axe étant monté sur un troisième point de rotation de la première tige de couplage.

3. Casier de rangement selon la revendication 2 **caractérisé en ce que** le troisième axe est disposé parallèlement au premier axe et à distance de celui-ci, et une roue dentée (45) fixe est disposée coaxialement au premier axe et engrène avec la roue dentée supplémentaire.

4. Casier de rangement selon l'une quelconque des revendications précédentes, **caractérisé en ce que** le mécanisme comporte un système d'entraînement (6) qui est en liaison fonctionnelle, de préférence directe, avec la première tige de couplage.

5. Casier de rangement selon l'une quelconque des revendications précédentes, **caractérisé en ce que** la première tige de couplage est reliée à un élément de rappel (7).

6. Casier de rangement selon l'une quelconque des revendications précédentes, **caractérisé en ce qu'**un système d'entraînement (8) électrique ou électromécanique est associé directement à la roue dentée supplémentaire.

7. Casier de rangement selon l'une quelconque des revendications précédentes, **caractérisé en ce qu'**il est prévu un support (9) qui est monté dans le volume de rangement de manière à pouvoir tourner par rapport à un point de fixation autour d'un axe (10) du casier et qui comporte un point d'appui (90) délimitant ledit support.

8. Casier de rangement selon la revendication 7, **caractérisé en ce que** le point d'appui touche une face inférieure du couvercle rabattable, ledit point d'appui (90) reposant de préférence sur une surface courbe du support.

9. Casier de rangement selon la revendication 7, **caractérisé en ce qu'**une deuxième tige de couplage (11) est montée sur le premier point de rotation de manière à pouvoir tourner autour du premier axe (41) dans le volume de rangement, ladite deuxième tige de couplage étant en liaison fonctionnelle avec le support (9), de telle sorte qu'un mouvement de rotation du support peut être induit lors de l'actionnement du mécanisme pour ouvrir et fermer le couvercle rabattable.

10. Casier de rangement selon la revendication 9, **caractérisé en ce que** la deuxième tige de couplage (11) est en liaison fonctionnelle, au moins en partie, avec la première tige de couplage (40).
